# EUROPÄISCHE PATENTSCHRIFT

(11) **EP 0 863 342 B1**
(45) Veröffentlichungstag und Bekanntmachung des Hinweises auf die Patenterteilung: **03.07.2002**
(21) Anmeldenummer: 98103803.7
(22) Anmeldetag: 04.03.1998
(51) Int. Cl.: F16K 15/04

(54) **Drucksteuerventil**
Pressure control valve
Soupape de commande de pression

(30) Priorität: 04.03.1997 DE 19708565
(43) Veröffentlichungstag der Anmeldung: 09.09.1998
(73) Patentinhaber: STEIN, Günter, 89415 Lauingen (DE)
(72) Erfinder: STEIN, Günter, 89415 Lauingen (DE)
(74) Vertreter: Schuster, Gregor, Dipl.-Ing.

(56) Entgegenhaltungen:
- DE-B- 2 313 590
- DE-U- 8 703 511
- US-A- 2 541 395
- US-A- 3 055 388

## Beschreibung

### Stand der Technik

Die Erfindung geht aus von einem Drucksteuerventil für flüssige Medien nach der Gattung des Hauptanspruchs. Das Problem derartiger Drucksteuerventile ist ein relativ lautes Schnarren während des Betriebs besonders bei kleineren Steuermengen, bei denen das Ventil laufend öffnet und wieder schließt. Solche Ventile können bei der Kraftstoffeinspritzung, insbesondere von Dieselkraftstoff, Verwendung finden aber auch in der Industriehydraulik, wobei in beiden Fällen das Schnarren als unangenehmes Geräusch sehr störend sein kann. Da es sich hier um ein durchaus auch mechanisches Geräusch handelt, ist auch von einer entsprechenden Abnutzung beispielsweise am Ventilsitz auszugehen.

Bei einem bekannten gattungsgemäßen Drucksteuerventil (US-PS 3,894,556) ist die Kugel axial verschiebbar in einer topfförmigen in ein Gehäuse eingeschraubten Buchse angeordnet, in deren Boden eine Zuflußbohrung mit Ventilsitz angeordnet ist und in deren Wandung dem Abfluß dienende Radialbohrungen vorhanden sind. Zum Aufsteuern des Ventils wird die Kugel über diese Radialbohrungen hinweg entgegen der Schließfeder verschoben, wonach dann das flüssige Medium über diese Radialbohrungen abströmen kann. Um diese Aufsteuerung vorzunehmen ist ein verhältnismäßig großer Hub erforderlich. Die Abflußbohrungen jedenfalls liegen stromab des Kugeläquators, so daß dieser erst die Bohrungen überfahren muß, bevor eine Aufsteuerung erfolgen kann. Eine Dämpfung der Kugel findet bestenfalls bei deren Schlußbewegung statt.

Bei einem anderen bekannten Drucksteuerventil (US-PS 2,451,586) ist die Kugel in einer Buchse angeordnet, die Teil des beweglichen Ventilglieds ist, wobei der Sitz der Kugel mit einer anderen axial verschiebbaren Buchse zusammenwirkt. Hierdurch ist zwar eine gewisse Dämpfung erreichbar, das Schnarren aber unvermeidbar.

Bei wiederum einem anderen bekannten Drucksteuerventil (DE-AS 23 13 590) wirkt die Kugel differenzialkolbenartig, so daß eine Art vorgesteuertes Druckbegrenzungsventil entsteht, bei dem die Kugel radial dichtend in einer Hülse geführt ist und die dem Ventilsitz abgewandte und in ihrer Fläche größer als die Sitzfläche vorhandene Stirnfläche der Kugel vom vor dem Ventilsitz herrschenden Druck beaufschlagt ist, wofür eine zusätzliche Bohrung von der Druckseite zu der die Stirnfläche aufnehmenden Raum führt. Erst, wenn ein entsprechend hoher Druck erreicht wird, dehnt sich die Hülse aus und läßt die zu steuernde Flüssigkeit an der Kugel vorbei zur Abflußöffnung strömen, wodurch aufgrund des sich damit gegebenen Druckverhältnisses die Kugel vom Ventilsitz abhebt, so daß auch von dieser Seite Flüssigkeit abströmen kann. Abgesehen davon, daß es sich hierbei um eine spezielle differenzialkolbenartige Steuerung handelt, die nicht das Ziel einer Dämpfung, sondern einer Vorsteuerung aufweist, ist der Aufbau eines solchen Ventils sehr aufwendig, ganz abgesehen davon, daß durch die gegebene Funktion ein Scharren des Ventils unterstützt wird, da durch den jeweils gegebenen Druckabbau nach Ausdehnen der Hülse mit einem intermittierenden, kurzfristigen Schließen des Ventils zu rechnen ist.

### Die Erfindung und ihre Vorteile

Das erfindungsgemäße Drucksteuerventil für flüssige Medien mit den kennzeichnenden Merkmalen des Hauptanspruchs hat demgegenüber den Vorteil, daß einerseits sehr schnell ein Öffnen der Abflußöffnung nach dem Öffnen der Zuflußbohrung gegeben ist und daß andererseits die Öffnungs- und /oder die Schließbewegung der Kugel gedämpft wird durch die Flüssigkeitsverdrängung in den Federraum bzw. aus dem im übrigen druck- und saugdicht geschlossenen Federraum, wobei sich der geringe radiale Abstand zwischen Kugel und Steuerraumwand auswirkt und wobei die Lage der radial abzweigenden Abflußöffnung zum Äquator der Kugel ebenfalls strömungstechnisch einen entsprechenden Einfluß auf die Dämpfungswirkung hat. Beim Aufsteuern wird somit zur Dämpfung der Öffnungsbewegung der Kugel Medium aus dem Federraum durch die Drosselstelle hin zur Abflußöffnung verdrängt, wobei zuerst möglicherweise vorhandene Luft oder Ölgase abströmen. Hierdurch ist nicht nur eine Dämpfung bei der Schließbewegung sondern auch bei der Öffnungsbewegung gegeben, die ebenfalls einem Schnarren entgegenwirkt.

Nach einer vorteilhaften Ausgestaltung der Erfindung zweigt bei geschlossenem Ventil die Abflußöffnung im wesentlichen von einem Ringraum ab, der zwischen Kugel und dem Übergangsbereich gebildet wird, wobei nach einer diesbezüglichen vorteilhaften Ausgestaltung der Erfindung bei geschlossenem Ventil eine Überschneidung zwischen Kugeläquator und Abflußöffnung stattfindet. Es hat sich gezeigt, daß dieser leichte Versatz zwischen der durch den Kugelmittelpunkt gehenden Ebene und der Achse der Abflußöffnung solange die Kugel die Schließstellung einnimmt für die angestrebte Wirkung vorteilhaft ist. Sobald die Kugel vom Ventilsitz abhebt, wird die vorher nur teilweise geöffnete Abflußöffnung vollständig aufgesteuert, während der mit dem Federraum verbundene Teil der Abflußöffnung entsprechend verschlossen wird, ggf. unter Beibehalten der oben genannten Drosselstelle.

Nach einer weiteren vorteilhaften Ausgestaltung der Erfindung dient als Drosselstelle eine in der Wandfläche der Steuerbohrung in Öffnungsrichtung des Ventils verlaufende Drosselnut, wobei die Drosselnut als Sacknut ausgebildet ist, welche in den Federraum mündet und vor dem Übergangsbereich endet. Hierdurch ist die Qualität der erfindungsgemäßen Drosselstelle leichter zu beherrschen und die Drosselwirkung besser zu steuern.

Nach einer weiteren vorteilhaften Ausgestaltung der Erfindung ist der Übergang im Steuerraum zwischen Ventilsitz und Steuerbohrung abgerundet, wobei der Radius dieser Abrundung weniger als der halbe Kugelradius ist. Hierdurch wird erreicht, daß in manchen Anwendungsfällen bei bleibendem Restdruck in der Zuflußbohrung einerseits das hydraulische Dämpfungsvolumen nicht zu gering ist, andererseits aber gering genug ist, um eine Dämpfung zu erzielen. Besonders dann, wenn mehr als eine Abflußöffnung vorhanden ist, werden die Abflußöffnung zudem durch diesen Ringraum miteinander verbunden.

Nach einer weiteren vorteilhaften Ausgestaltung der Erfindung ist zwischen Schließfeder und Kugel ein Federteller angeordnet, welcher kolbenartig und damit bewegungsdämpfend im Federraum wirkt. Auch dies bewirkt eine gewisse Dämpfung der Kugel durch die damit gegebene Mediumverdrängung.

Nach einer weiteren vorteilhaften Ausgestaltung der Erfindung ist das Ventilgehäuse in axialer Richtung zweiteilig ausgebildet, wobei die Teilungsstelle im Bereich des Federraums liegt. Eine solche Zweiteiligkeit ist für die Montage erforderlich, wobei die Verbindung der beiden Teile durch einen Preßsitz erfolgen kann und eine dort gestaltete Ringnut zur Aufnahme eines O-Rings dienen kann.

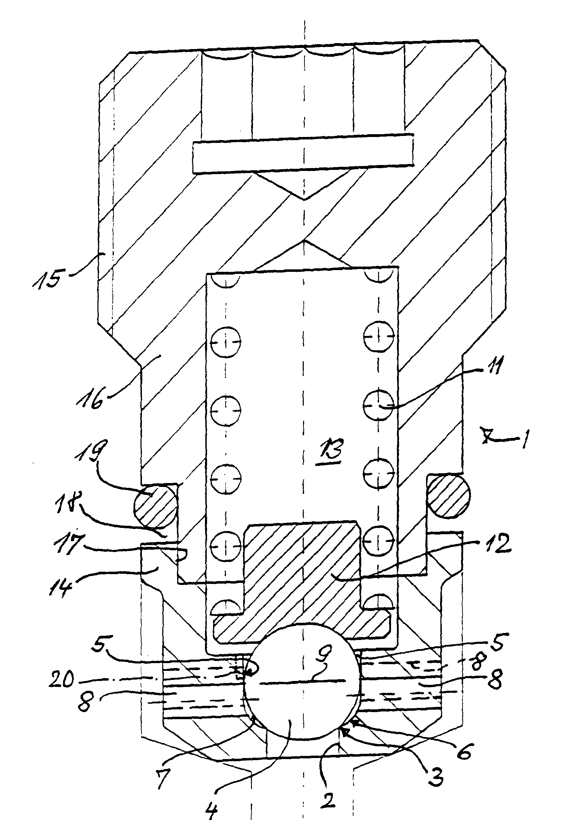

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt in Form eines Längsschnitts durch ein Drucksteuerventil.

### Beschreibung des Ausführungsbeispiels

Bei dem in der Zeichnung dargestellten Drucksteuerventil ist in einem zweiteiligen Gehäuse 1 am Ende einer Zuflußbohrung 2 ein ringförmiger Ventilsitz 3 vorhanden, der mit einer als bewegliches Ventilglied dienenden Kugel 4 zusammenwirkt. Die Kugel 4 ist in einem koaxial zur Zuflußbohrung 2 angeordneten Steuerraum 5 axial beweglich angeordnet, wobei der Durchmesser des Steuerraums 5 nur geringfügig größer ist als der Durchmesser der Kugel 4. Der Steuerraum 5 weist einen abgerundeten Übergang 6 zum Ventilsitz 3 hin auf, wodurch sich zwischen Kugel 4 und Ventilgehäuse 1 in der gezeigten geschlossenen Stellung des Drucksteuerventils ein sichelförmiger Ringraum 7 ergibt. Dieser Ringraum 7 verbindet zwei radial abzweigende und im Gehäuse 1 verlaufende als Abflußöffnungen dienende Abflußöffnungen 8 miteinander. Bei den in der Zeichnung ausgezogen dargestellten Abflußöffnungen 8 geht deren obere Begrenzungslinie über in den Äquator 9 der Kugel 4. Stattdessen kann auch die obere Begrenzungslinie der Abflußbohrung 8 - wie gestrichelt angedeutet - oberhalb des Äquators 9 verlaufen, was eine entsprechend leicht veränderte Funktion der Drosselwirkung zur Folge hat.

Die Kugel 4 ist durch eine Schließfeder 11 unter Zwischenschaltung eines Federtellers 12 in Schließrichtung belastet. Beides ist in einem Federraum 13 angeordnet, der im übrigen dicht abgeschlossen ist. Das Gehäuse ist zur Bildung dieses Federraums 13 aber auch um überhaupt die Montage der Kugel 4 zu ermöglichen, zweiteilig ausgebildet, mit einem unteren, die Zuflußbohrung 2 und die Abflußöffnungen 8 aufweisenden Gehäuseteil 14 und einem oberen, den Federraum 13 begrenzenden und ein Einschraubgewinde 15 aufweisenden oberen Gehäuseteil 16. Die beiden Gehäuseteile 14 und 16 sind ineinandergesteckt und über einen Preßsitz 17 miteinander verbunden. Zwischen den beiden Teilen ergibt sich dadurch eine Ringnut 18 zur Aufnahme eines Rundschnurringes 19.
In der Zeichnung ist als mögliche Drosselstelle ein Drosselkanal 20 strichpunktiert dargestellt, welcher in der Wand des Steuerraums 5 angeordnet ist, vom Kugelhorizont überfahren wird und bei geschlossenem Ventil oberhalb des Kugelhorizonts endet.

Das erfindungsgemäße Drucksteuerventil arbeitet wie folgt: Sobald ein Überdruck in der Zulaufbohrung entsteht, wird die Kugel 4 vom Sitz 3 abgehoben und verdrängt Flüssigkeit in den Federraum, aus dem ein Teil der in die Abflußöffnung 8 abströmt und dabei Luft und Gase aus diesem mitreißt. Beim weiteren Öffnungsvorgang wird über die Kugel 9 und den Federteller 12 Flüssigkeit aus dem Federraum 13 verdrängt und strömt dabei durch den Drosselspalt bzw. die Drosselnut 20, welche zwischen der Wand des Steuerraums 5 und der Kugel 4 wirken, hin zum Ringraum 7 und von dort zu den Abflußöffnung 8. Dies bewirkt in jedem Fall eine Dämpfung der Öffnungsbewegung. Sobald dann nach Abnahme des Überdrucks in der Zulaufbohrung 2 die Kugel 4 wieder nach unten verschoben wird, saugt diese aus dem Federraum 13 Flüssigkeit nach, wodurch wiederum die Schließbewegung gedämpft wird. Beide Arbeitsbewegungen der Kugel 4 werden somit gedämpft, wodurch das Schnarren dieses Drucksteuerventils unterbunden wird.

### Bezugszahlenliste

- 1: Gehäuse
- 2: Zuflußbohrung
- 3: Ventilsitz
- 4: Kugel
- 5: Steuerraum
- 6: Übergang
- 7: Ringraum
- 8: Abflußöffnung
- 9: Äquator
- 10 11: Schließfeder
- 12: Federteller
- 13: Federraum
- 14: unterer Gehäuseteil
- 15: Einschraubgewinde
- 16: oberer Gehäuseteil
- 17: Preßsitz
- 18: Ringnut
- 19: Rundschnurring
- 20: Drosselnut

## Patentansprüche

1. Drucksteuerventil für flüssige Medien mit einem einen Steuerraum (5) mit einer Zuflußbohrung (2) und mindestens einer Abflußöffnung (8) aufweisenden, zur Montage mehrteilig ausgebildeten Ventilgehäuse (1), wobei die Abflußöffnung (8) radial vom Steuerraum (5) ausgeht
- mit einer Kugel (4) als beweglichem Ventilglied, welche mit einem kreisförmigen, das Ende der Zuflußbohrung (2) zum Steuerraum (5) hin bestimmenden Ventilsitz (3) zusammenwirkt
- mit einem als Bohrungserweiterung der Zuflußbohrung zum Steuerraum hin ausgebildeten Übergangsbereich und
- mit einer die Kugel (4) in Schließrichtung belastenden und in einem Federraum (13) angeordneten Schließfeder (11),
**dadurch gekennzeichnet,**
- **daß** die Kugel (4) mit geringem radialem Abstand im Steuerraum (5) geführt ist,
- **daß** zwischen Kugel (4) und Steuerraum (5) mindestens eine Drosselstelle für das Medium vorhanden ist,
- **daß** der Federraum (1) ein an sich geschlossener, zum Steuerraum (5) hin offener Raum ist und
- **daß** zur Dämpfung der Bewegung der Kugel (4) Medium durch die Drosselstelle verdrängt wird.

2. Drucksteuerventil nach Anspruch 1, **dadurch gekennzeichnet, daß** bei geschlossenem Ventil die Abflußöffnung (8) im wesentlichen von einem Ringraum abzweigt, der zwischen Kugel und dem Übergangsbereich gebildet wird.

3. Durcksteuerventil nach Anspruch 1 oder 2, **dadurch gekennzeichnet, daß** bei geschlossenem Ventil eine Überschneidung zwischen Kugeläquator (9) und Abflußöffnung (8) stattfindet.

4. Drucksteuerventil nach einem der vorhergehenden Ansprüche dadurch gekennzeichet, daß als Drosselstelle eine in der Wandfläche der Steuerbohrung in Öffnungsrichtung des Ventils verlaufende Drosselnut (20) dient.

5. Drucksteuerventil nach Anspruch 4, **dadurch gekennzeichnet, daß** die Drosselnut (20) als Sacknut ausgebildet ist, welche in den Federraum mündet und vor dem Übergangsbereich endet.

6. Drucksteuerventil nach einem der vorhergehenden Ansprüche , **dadurch gekennzeichnet, daß** der Übergangsbereich im Steuerraum stromab des Ventilsitzes (3) abgerundet ist und mit der Kugel (4) einen Ringraum (7) bildet.

7. Drucksteuerventil nach Anspruch 6, **dadurch gekennzeichnet, daß** der Radius der Abrundung im Ringraum (7) geringer ist als der halbe Radius der Kugel (4).

8. Drucksteuerventil nach einem der vorhergehenden Ansprüche, **dadurch gekennzeichnet, daß** mindestens zwei Abflußöffnungen (8) vorhanden sind.

9. Drucksteuerventil nach einem der vorhergehenden Ansprüche, **dadurch gekennzeichnet, daß** zwischen Schließfeder (11) und Kugel (4) ein Federteller (12) angeordnet ist, welcher kolbenartig ausgebildet ist.

10. Drucksteuerventil nach einem der vorhergehenden Ansprüche, **dadurch gekennzeichnet, daß** das Ventilgehäuse (1) in Axialrichtung aus zwei Teilen (14 und 16) besteht und die Teilungsstelle im Bereich des Federraums (13) liegt.

11. Drucksteuerventil nach Anspruch 10, **dadurch gekennzeichnet, daß** an der Teilungsstelle eine Ringnut (18) zur Aufnahme eines Rundschnurrings (19) vorgesehen ist.

## Claims

1. Pressure control valve for liquid media with a valve housing (1) developed in multiple parts for assembly and having a control chamber (5) with an inflow hole (2) and at least one discharge opening (8), whereby the discharge opening (8) extends radially from the control chamber (5),
- with a sphere (4) as a movable valve member which co-operates with a circular valve seat (3) determining the end of the inflow hole (2) in respect of the control chamber (5),
- with a transition zone developed as an expansion of the inflow hole towards the control chamber, and
- with a locking spring (11) arranged in a spring chamber (13) and charging the sphere (4) in the closing direction,
**characterised in that**
- the sphere (4) is guided in the control chamber (5) at a slight radial distance,
- at least one restricted flow zone for the medium exists between the sphere (4) and the control chamber (5),
- the spring chamber (13) is an integral chamber that is open towards the control chamber (5), and
- medium is forced through the restricted flow zone in order to dampen the movement of the sphere (4).

2. Pressure control valve according to claim 1, **characterised in that** when the valve is closed the discharge opening (8) essentially branches off from an annular space that is formed between the sphere and the transition zone.

3. Pressure control valve according to claim 1 or 2, **characterised in that** when the valve is closed there is an intersection between the equator of the sphere (9) and the discharge opening (8).

4. Pressure control valve according to one of the above claims, **characterised in that** a flow restriction groove (20) running in the wall surface of the control hole in the opening direction of the valve serves as the restricted flow zone.

5. Restrictor valve according to claim 4, **characterised in that** the flow restriction groove (20) is developed as a blind groove which runs into the spring chamber and ends before the transition zone.

6. Pressure control valve according to one of the above claims, **characterised in that** the transition zone in the control chamber is rounded off downstream of the valve seat (3) and forms an annular space (7) with the sphere (4).

7. Pressure control valve according to claim 6, **characterised in that** the radius of the sphericity in the annular space (7) is less than half the radius of the sphere (4).

8. Pressure control valve according to one of the above claims, **characterised in that** at least two discharge openings (8) exist.

9. Pressure control valve according to one of the above claims, **characterised in that** a spring plate (12) which is developed in the form of a piston is located between the locking spring (11) and the sphere (4).

10. Pressure control valve according to one of the above claims, **characterised in that** the valve housing (1) in the axial direction consists of two parts (14 and 16) and that the dividing zone lies in the area of the spring chamber (13).

11. Pressure control valve according to claim 10, **characterised in that** an annular groove (18) is provided at the dividing point to accommodate a round cord ring (19).

## Revendications

1. Soupape de commande de pression destinée à des milieus liquides et équipée d'une cage de soupape (1), conçue en plusieurs parties pour le montage, présentant une chambre de pression (5) avec un canal d'alimentation (2) et au moins un orifice d'écoulement (8), l'orifice d'écoulement (8) partant de façon radiale de la chambre de pression (5)
- avec une bille (4) comme élément de soupape mobile, qui agit conjointement avec un siège de soupape (3) de forme circulaire et définissant l'extrémité de canal d'alimentation (2) en direction de la chambre de pression (5)
- avec une zone de transition conçue comme une extension de canal d'alimentation en direction de la chambre de pression et
- avec un ressort de fermeture (11) sollicitant la bille (4) dans le sens de fermeture et disposé dans un espace de ressort (13),
**caractérisé**
- **en ce que** la bille (4) est guidée avec un faible espacement radial dans la chambre de pression (5),
- **en ce qu'**au moins un point d'étranglement pour l'agent est présent entre la bille (4) et la chambre de pression (5),
- **en ce que** l'espace de ressort (1) est un espace fermé en soi et ouvert sur la chambre de pression (5) et
- **en ce que** l'agent est refoulé par le point d'étranglement pour l'amortissement du mouvement de la bille (4).

2. Soupape de commande de pression selon la revendication 1, **caractérisée en ce que**, lorsque la soupape est fermée, l'orifice d'écoulement (8) dévie sensiblement d'un espace annulaire qui est formé entre la bille et la zone de transition.

3. Soupape de commande de pression selon la revendication 1 ou 2, **caractérisée en ce que**, lorsque la soupape est fermée, un chevauchement a lieu entre l'équateur de la bille (9) et l'orifice d'écoulement (8).

4. Soupape de commande de pression selon l'une quelconque des revendications précédentes, **caractérisée en ce qu'**une rainure d'étranglement (20) agencée dans la surface de paroi de l'alésage de commande dans le sens d'ouverture de la soupape fait office de point d'étranglement.

5. Soupape de commande de pression selon la revendication 4, **caractérisée en ce que** la rainure d'étranglement (20) est conçue comme une rainure borgne, qui débouche dans l'espace de ressort et se termine avant la zone de transition.

6. Soupape de commande de pression selon l'une quelconque des revendications précédentes, **caractérisée en ce que** la zone de transition dans la chambre de pression est arrondie en aval du siège de soupape (3) et forme un espace annulaire avec la bille (4).

7. Soupape de commande de pression selon la revendication 6, **caractérisée en ce que** le rayon de l'arrondi dans l'espace annulaire (7) est inférieur au demi-rayon de la bille (4).

8. Soupape de commande de pression selon l'une quelconque des revendications précédentes, **caractérisée en ce qu'**il y a au moins deux orifices d'écoulement (8).

9. Soupape de commande de pression selon l'une quelconque des revendications précédentes, **caractérisée en ce qu'**entre le ressort de fermeture (11) et la bille (4) est disposée une coupelle de ressort (12) qui est conçue comme un piston.

10. Soupape de commande de pression l'une quelconque des revendications précédentes, **caractérisée en ce que** la cage de soupape (1) comprend deux parties (14 et 16) dans le sens axial et le point de séparation est disposé dans la zone de l'espace de ressort (13).

11. Soupape de commande de pression selon la revendication 10, **caractérisée en ce qu'**une rainure annulaire (18) est prévue à l'endroit de séparation pour le logement d'un joint torique (19).
